# EUROPEAN PATENT SPECIFICATION

(11) **EP 2 371 250 B1**
(45) Date of publication and mention of the grant of the patent: **19.11.2014**
(21) Application number: 11160508.5
(22) Date of filing: 30.03.2011
(51) Int. Cl.: A47J 37/12

(54) **Apparatus for cooking foods**
Vorrichtung zum Kochen von Nahrungsmitteln
Appareil de cuisson d'aliments

(30) Priority: 31.03.2010 IT MO20100092
(43) Date of publication of application: 05.10.2011
(73) Proprietor: Angelo Po Grandi Cucine-Societa'per Azioni, 41012 Carpi (MO) (IT)
(72) Inventor: Boscaino, Luigi, 41100, Modena (IT); Soavi, Alessandro, 41030 Sorbara (MO) (IT)
(74) Representative: Crugnola, Pietro

(56) References cited:
- US-A- 5 577 438
- US-A- 5 611 330
- US-A- 5 617 776
- US-A- 6 029 653

## Description

The present invention relates to an apparatus for cooking foods, in particular an apparatus for frying foods.

From EP 0592087 an apparatus is known for frying foods that comprises a cooking tank that contains the oil for frying, in which the foods to be cooked are immersed that are contained inside baskets that are inserted into the cooking tank.

The oil is heated by heating elements consisting of radiant burners inserted into pipes that traverse the cooking tank. The radiant burners are supplied by a gas fuel. The cooking tank is equipped, laterally and to the rear with a liner that defines a gap in which the fumes are circulated that are produced by the combustion of the gas fuel, before they are sent to a discharge conduit. The oil contained in the cooking tank is heated by the effect of the radiant heat generated by the radiant burners and the heat contained in the fumes circulated in the aforesaid gap.

Exploiting thermal energy produced by the heating elements is fairly efficient. Nevertheless, only part of the residual heat contained in the fumes is exploited and the fumes reach the discharge conduit at a still high temperature, of the order of a few hundred degrees, with the consequence that a significant part of the thermal energy contained in said fumes is not exploited.

US 6 029 653 A discloses an apparatus for cooking foods comprising a cooking tank for containing a liquid for cooking said foods, a heating element comprising a tubular element inside which a burner is inserted that is supplied with a gas fuel, a discharge conduit for discharging fumes produced by the combustion of said gas fuel; the apparatus further comprising a first heat exchanger element inserted inside said cooking tank, said first heat exchanger element communicating with said tubular element, and a second heat exchanger element placed outside said cooking tank and in heat contact with the side walls of the cooking tank, said second heat exchanger element communicating with said first heat exchanger element and with said discharge conduit.

Even in the apparatus disclosed in US 6 029 653 A only part of the residual heat contained in the fumes is exploited and the fumes reach the discharge conduit at a still high temperature.

The present invention aims to improve exploiting thermal energy produced by the heating elements in a cooking apparatus, in particular an apparatus for frying foods, in which the heating elements consist of burners supplied with a gas fuel.

The object of the invention is achieved with an apparatus for cooking foods according to claim 1.

Owing to the invention, it is possible to exploit with maximum efficiency the heat contained in the combustion fumes of the burners used to heat the cooking liquid.

The invention can be understood and implemented better with reference to the attached drawings, which illustrate an embodiment thereof by way of non-limiting example, in which:
Figure 1 is a perspective view of a cooking apparatus according to the invention;
Figure 2 is a partially sectioned raised view of the apparatus in figure 1;
Figure 3 is a partially sectioned top view of the apparatus in figure 1;
Figure 4 is a perspective view of a detail of the apparatus in figure 1;
Figure 5 is a perspective view of a version of the detail in
Figure 4;

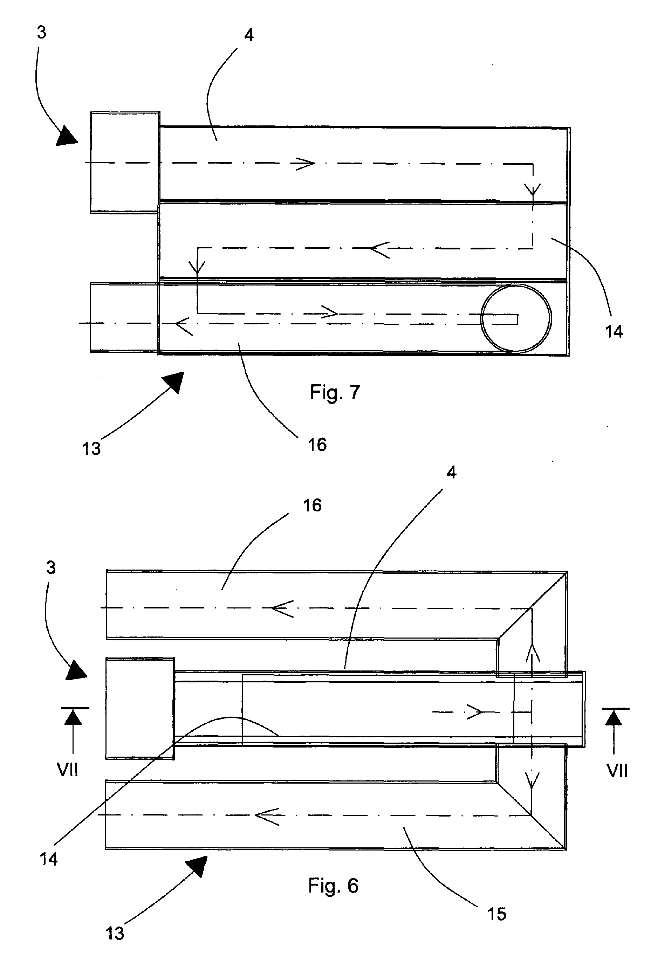

Figure 6 is a partially sectioned top view of the version in
Figure 5;
Figure 7 is the section VII-VII in Figure 6.

An apparatus 1 for cooking foods according to the invention comprises a tank 2 into which a cooking liquid, for example oil, is poured. The foods to be cooked are placed in the cooking liquid, after being inserted, for example into suitable containing baskets. The tank 2 is provided with a discharge conduit 23 for discharging the cooking liquid therefrom.

The cooking liquid is heated by a heating element 3 comprising a tubular element 4 inside which a burner is inserted (which is not shown) which is supplied by a gas fuel. The tubular element 4 is arranged longitudinally inside the tank 2. The tubular element 4 may have a cross section of any shape, for example, circular, elliptical, or polygonal.

With the heating element 3 a first heat exchanger element 5 is associated in which the fumes are circulated that are produced by the combustion of the gas fuel burnt in said burner.

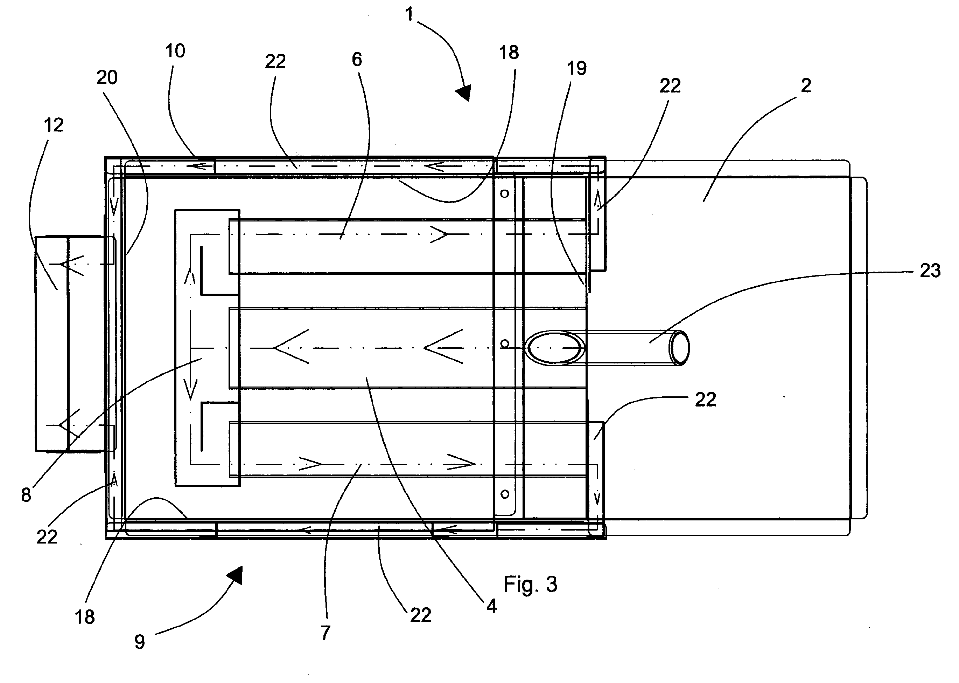

The first heat exchanger element 5 comprises a pair of further tubular elements 6, 7 (Figure 3) arranged preferably parallel to said tubular element 4 and on sides opposite said tubular element 4 and in positions substantially symmetrical with respect to said tubular element 4. The further tubular elements 6, 7 communicate, at an end thereof, with a respective end of the tubular element 4 by a connecting element 8.

The symmetrical arrangement of the further tubular elements 6 and 7 with respect to the tubular element 4 enables a balanced distribution of the mechanical stresses generated by the temperature variations to which the tubular element 4 and the further tubular elements 6 and 7 are subjected. This improves the reliability of the apparatus 1, inasmuch as it drastically reduces the likelihood of breakages of the tubular element 4 and of the further tubular elements 6 and 7 caused by mechanical stress due to temperature variations. The apparatus 1 further comprises a second heat exchanger element 9, comprising a liner 10 inside which a gap 22 is defined in which said fumes can circulate. The liner 10 surrounds the tank 2 on each side and below, being in thermal contact with the side walls 17, 18, with the front wall 19, with the rear wall 20 and with the bottom 21 of the cooking tank 2. The liner 10 has an interruption 11 at the mouth 24 of the tubular element 4, through which the burner is inserted into the tubular element 4.

The gap 22 of the liner 10 communicates with the ends of the further tubular elements 6, 7 opposite the ends connected to the connecting element 8. In this manner, the fumes coming from the further tubular elements 6, 7 are delivered to the gap 22 of the liner 10 and circulate therein, surrendering heat to the side walls and to the bottom of the tank 2, in such a manner as to supply further heat to the cooking liquid.

The gap 22 lastly communicates with a discharge conduit 12, through which said fumes can be discharged outside the apparatus 1, for example to a fume flue.

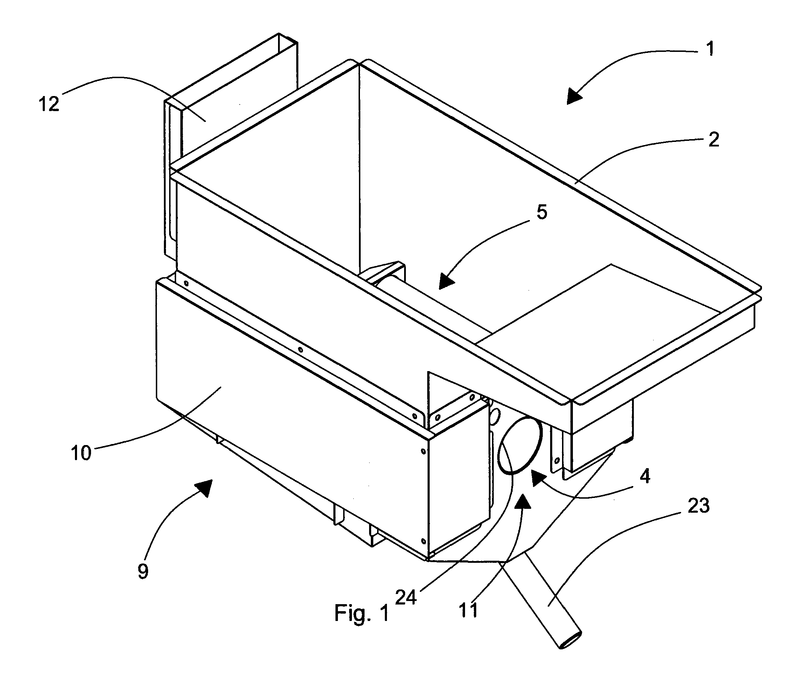

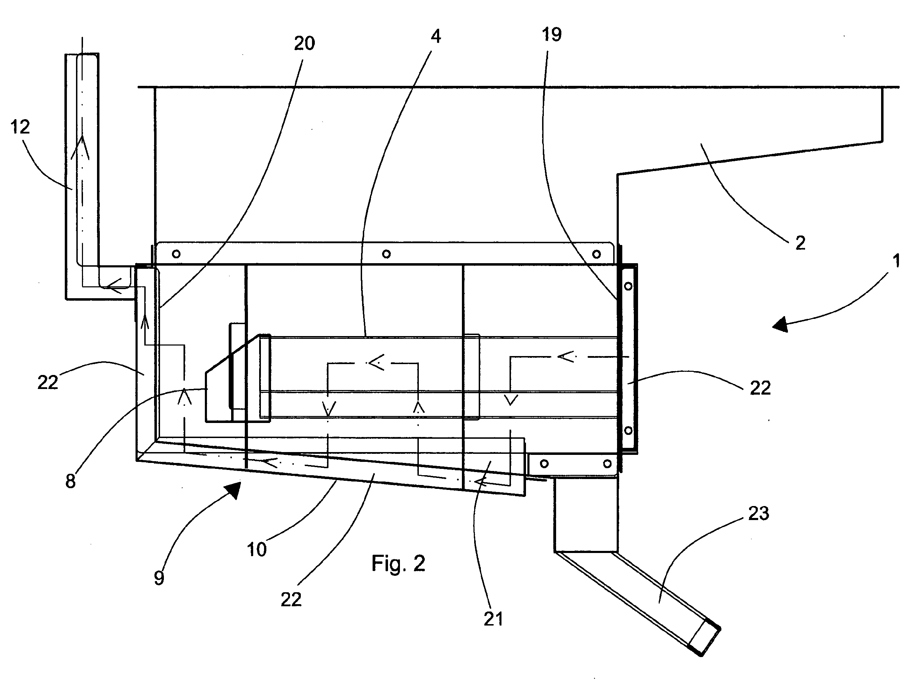

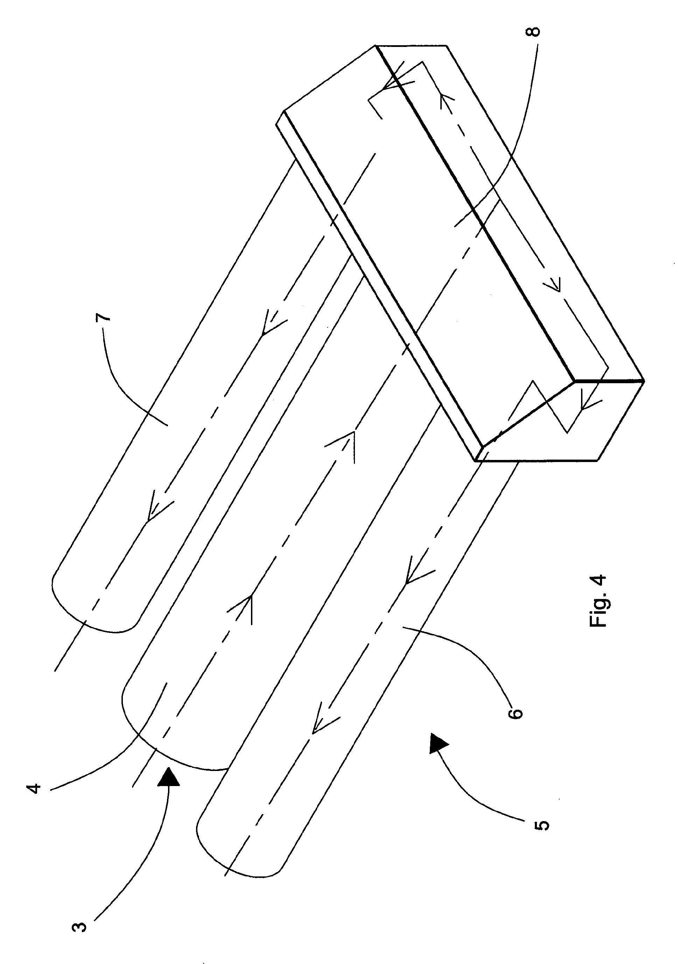

The path of the fumes from the tubular element 4 to the discharge conduit 12 is shown by arrows in figures 1 to 4.

The cooking liquid poured into the cooking tank 2 is thus heated by the radiant heat generated inside the tubular element 4 by the combustion of the gas fuel with which the burner inserted into the tubular element 4 is supplied and by the heat contained in the combustion fumes that heat the cooking liquid both from the inside the cooking tank 2, by the first heat exchanger 5, and from the outside of the cooking tank 2, by the second heat exchanger 9. As the second heat exchanger 9 surrounds the cooking tank 2 both laterally and below, the heat exchange surface of the second heat exchanger 9 is very great and ensures great transfer of heat from the fumes to the cooking tank 2 and, then, to the cooking liquid. Further, the transfer of heat to the cooking liquid is increased by the fact that the path that the fumes follow from the heating element 3 to the discharge conduit 12 is significantly longer than in prior art apparatuses, which increases the time during which the fumes transmit heat to the cooking liquid.

This all enables the heat contained in the combustion fumes to be exploited very efficiently compared with prior art cooking apparatuses and enables said fumes to be discharged at a relatively low temperature, also noticeably below 200°C.

Further, the presence of the further tubular elements 6, 7 connected to the tubular element 4 via the connecting element 8 enables also blown burners to be used in the apparatus according to the invention, in addition to radiant or total premising burners, the blown burners not being usable in the apparatus disclosed in EP 0592087 and in other apparatuses known from the state of the art. In fact, a blown burner generates a flame of significant length that, in the apparatus disclosed in EP 0592087, could directly reach the liner located outside the cooking tank, with the risk of subjecting the liner to excessive thermal stress and of producing high temperatures in the external walls of the liner, which would be dangerous for those using the apparatus.

In other types of cooking apparatuses, in which no liner is located outside the cooking tank, the flame produced by a blown burner could enter the fume flue, with the risk of overheating the fume flue.

In the apparatus according to the invention, on the other hand, the flame remains, so to speak, "trapped" inside the further tubular elements 6 and 7 without the possibility of entering the gap 22 or the discharge conduit 12 of the fumes.

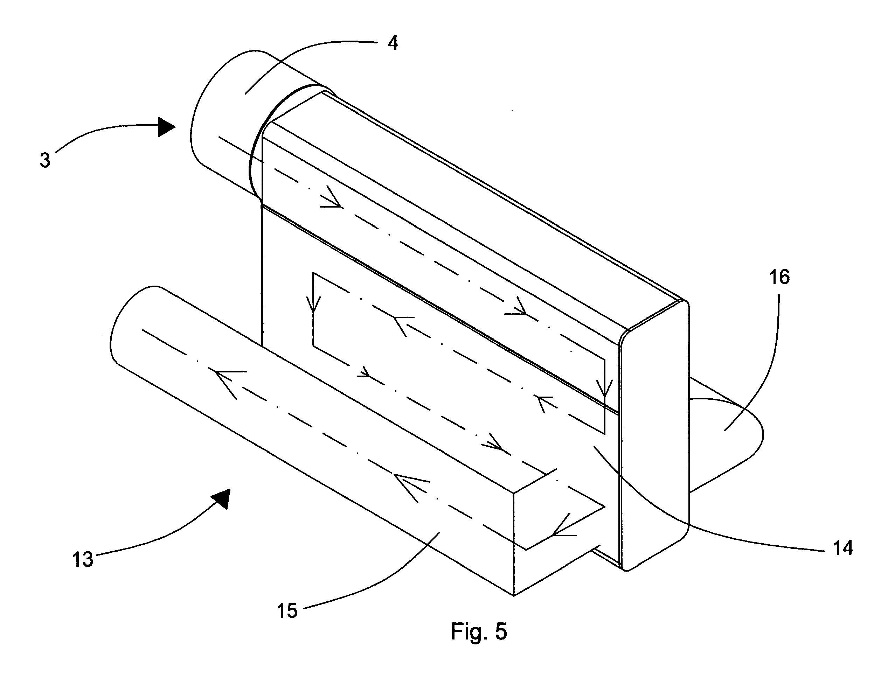

In Figures 5, 6 and 7 there is shown a further embodiment of the first heat exchanger element, indicated by the reference number 13.

In this further embodiment, the first heat exchanger element 13 comprises a first exchanger body 14, located below the tubular element 4, and communicating therewith, a second exchanger body 15 and a third exchanger body 16, arranged on opposite sides of the first exchanger body 14 and communicating therewith. Alternatively, the first exchanger body can be placed above the tubular element 4. The second exchanger body 15 and the third exchanger body 16 are arranged in substantially symmetrical positions with respect to the first exchanger body 14 and are preferably parallel thereto. The second exchanger body 15 and the third exchanger body 16 further communicate with the second heat exchanger element 9.

In this second embodiment the first heat exchanger element 13 has a heat exchange surface, that, in addition to being more extensive than the heat exchange surface of the first heat exchanger element 5, extends both longitudinally and in height inside the cooking tank 2, in such a manner as to increase further the heat exchange between the fumes that circulate inside the first heat exchanger element 13 and the cooking liquid contained in the tank 2.

Also in Figures 5, 6 and 7 the path of the combustion fumes from the heating element 3 to the discharge conduit 12 is shown by arrows.

Owing to the invention it is possible to obtain optimal exploitation of the heat contained in the fumes produced by combustion of the gas fuel burnt in the burner inserted inside the heating element 3, which enables the thermal efficiency of the apparatus 1 to be optimised, the thermal efficiency being defined as the ratio between the heat supplied to the cooking liquid and the heat produced by combustion of said gas fuel.

Also in this further embodiment of the apparatus 1 according to the invention, if a blown burner is used, the flame produced by the combustion of the fuel used remains "trapped" inside the first exchanger body 14, the second exchanger body 15 and the third exchanger body 16, without reaching the gap 22 or the discharge conduit 12 of the fumes.

It is should be noted that the further embodiment of the first heat exchanger 5 illustrated in Figures 1 to 4 is particularly suitable for cooking apparatuses 1 with a cooking tank 2 that is shallow and/or of small volume, whereas the embodiment of the first heat exchanger 13 illustrated in Figures 5, 6 and 7 is particularly suitable for cooking apparatuses 1 with a cooking tank 2 that is deep and/or of a large volume.

## Claims

1. Apparatus (1) for cooking foods, comprising a cooking tank (2) intended for containing a liquid for cooking said foods, a heating element (3) comprising a tubular element (4) inside which a burner is inserted that is supplied with a gas fuel, a discharge conduit (12) for evacuating fumes produced by the combustion of said gas fuel, a first heat exchanger element (5; 13) inserted inside said cooking tank (2), said first heat exchanger element (5; 13) communicating with said tubular element (4), a second heat exchanger element (9) placed outside said cooking tank (2) and in thermal contact with side walls (17, 18), front wall (19) rear wall (20) and bottom (21) of the cooking tank (2), said second heat exchanger element (9) communicating with said first heat exchanger element (5; 13) and with said discharge conduit (12), wherein said second heat exchanger element (9) comprises a liner (10) inside which a gap (22) is defined that communicates with said first heat exchanger element (5; 13) and said discharge conduit (12), said liner (10) surrounding the tank (2) on both sides and below.

2. Apparatus (1) according to claim 1, wherein said first heat exchanger element (5) comprises a pair of further tubular elements (6, 7) communicating, at an end thereof, with a respective end of the tubular element (4) by a connecting element (8).

3. Apparatus (1) according to claim 2, wherein said further tubular elements (6, 7) are arranged on opposite sides of said tubular element (4), said further tubular elements (6, 7) being arranged in positions that are substantially symmetrical with respect to said tubular element (4).

4. Apparatus (1) according to claim 3, wherein said further tubular elements (6, 7) are arranged parallel to said tubular element (4).

5. Apparatus (1) according to claim 1, wherein said first heat exchanger element (13) comprises a first exchanger body (14), placed below the tubular element (4).

6. Apparatus (1) according to claim 1, wherein said first heat exchanger element (13) comprises a first exchanger body (14), placed above the tubular element (4).

7. Apparatus (1) according to claim 5, or 6, wherein said first heat exchanger element (13) further comprises a second exchanger body (15) and a third exchanger body (16), arranged on opposite sides of the first exchanger body (14) and communicating therewith, said second exchanger body (15) and said third exchanger body (16) being substantially symmetrical with respect to said first exchanger body (14).

8. Apparatus (1) according to claim 7, wherein said second exchanger body (15) and said third exchanger body (16) are arranged parallel to said first exchanger body (14).

## Patentansprüche

1. Apparat (1) zum Kochen von Nahrungsmitteln, aufweisend einen Kochtank (2), der für das Aufnehmen einer Flüssigkeit zum Kochen der Nahrungsmittel vorgesehen ist, ein Heizelement (3), das ein Röhrenelement (4) aufweist, in dem ein Brenner eingesetzt ist, der mit einem Gasbrennstoff versorgt wird, einen Austrittskanal (12) zum Evakuieren von Dämpfen, die durch das Verbrennen des Gasbrennstoffes produziert werden, ein erstes Wärmetauscherelement (5; 13), das in den Kochtank (2) eingesetzt ist, wobei das erste Wärmetauscherelement (5; 13) in Verbindung steht mit dem Röhrenelement (4), ein zweites Wärmetauscherelement (9), das außerhalb des Kochtanks (2) platziert ist und in thermalem Kontakt mit Seitenwänden (17, 18), einer Vorderwand (19) und Rückwand (20) und einem Boden (21) des Kochtanks (2) steht, wobei das zweite Wärmetauscherelement (9) mit dem ersten Wärmetauscherelement (5; 13) und mit dem Austrittskanal (12) in Verbindung steht, wobei das zweite Wärmetauscherelement (9) eine Ummantelung (10) aufweist, in der ein Zwischenraum (22) definiert ist, der mit dem ersten Wärmetauscherelement (5; 13) und dem Austrittskanal (12) in Verbindung steht, wobei die Ummantelung (10) den Tank (2) auf beiden Seiten und unterhalb umgibt.

2. Apparat (1) gemäß Anspruch 1, wobei das erste Wärmetauscherelement (5) ein Paar von weiteren Röhrenelementen (6, 7) aufweist, das an einem ihrer Enden mit einem entsprechenden Ende des Röhrenelements (4) über ein Verbindungselement (8) in Verbindung steht.

3. Apparat (1) gemäß Anspruch 2, wobei die weiteren Röhrenelemente (6, 7) an gegenüberliegenden Seiten des Röhrenelements (4) angeordnet sind, wobei die weiteren Röhrenelemente (6, 7) in Positionen angeordnet sind, die im Wesentlichen symmetrisch in Bezug auf das Röhrenelement (4) sind.

4. Apparat (1) gemäß Anspruch 3, wobei die weiteren Röhrenelemente (6, 7) parallel zu dem Röhrenelement (4) angeordnet sind.

5. Apparat (1) gemäß Anspruch 1, wobei das erste Wärmetauscherelement (13) einen ersten Austauschkörper (14) aufweist, der unter dem Röhrenelement (4) platziert ist.

6. Apparat (1) gemäß Anspruch 1, wobei das erste Wärmetauscherelement (13) einen ersten Austauschkörper (14) aufweist, der über dem Röhrenelement (4) platziert ist.

7. Apparat (1) gemäß Anspruch 5 oder 6, wobei das erste Wärmetauscherelement (13) ferner einen zweiten Austauschkörper (15) und einen dritten Austauschkörper (16) aufweist, die an gegenüberliegenden Seiten des ersten Austauschkörpers (14) angeordnet sind und mit diesem in Verbindung stehen, wobei der zweite Austauschkörper (15) und der dritte Austauschkörper (16) im Wesentlichen symmetrisch in Bezug auf den ersten Austauschkörper (14) sind.

8. Apparat (1) gemäß Anspruch 7, wobei der zweite Austauschkörper (15) und der dritte Austauschkörper (16) parallel zu dem ersten Austauschkörper (14) angeordnet sind.

## Revendications

1. Appareil (1) de cuisson d'aliments, comprenant une cuve de cuisson (2) destinée à contenir un liquide de cuisson desdits aliments, un élément de chauffage (3) comportant un élément tubulaire (4) à l'intérieur duquel un brûleur est inséré en étant alimenté par un combustible gazeux, un conduit de décharge (12) pour évacuer des fumées produites par la combustion dudit combustible gazeux, un premier élément échangeur de chaleur (5 ; 13) inséré à l'intérieur de ladite cuve de cuisson (2), ledit premier élément échangeur de chaleur (5 ; 13) communiquant avec ledit élément tubulaire (4), un deuxième élément échangeur de chaleur (9) placé à l'extérieur de ladite cuve de cuisson (2) et en contact thermique avec des parois latérales (17, 18), une paroi frontale (19), une paroi arrière (20) et un fond (21) de la cuve de cuisson (2), ledit deuxième élément échangeur de chaleur (9) communiquant avec ledit premier élément échangeur de chaleur (5 ; 13) et avec ledit conduit de décharge (12), dans lequel ledit deuxième élément échangeur de chaleur (9) comprend une gaine (10) à l'intérieur de laquelle un espace (22) est défini et communique avec ledit premier élément échangeur de chaleur (5 ; 13) et avec ledit conduit de décharge (12), ladite gaine (10) entourant la cuve (2) des deux côtés et au-dessous.

2. Appareil (1) selon la revendication 1, dans lequel ledit premier élément échangeur de chaleur (5) comprend une paire d'éléments tubulaires (6, 7) supplémentaires communiquant, à une de leurs extrémités, avec une extrémité respective de l'élément tubulaire (4) par l'intermédiaire d'un élément de connexion (8).

3. Appareil (1) selon la revendication 2, dans lequel lesdits éléments tubulaires (6, 7) supplémentaires sont disposés sur des côtés opposés dudit élément tubulaire (4), lesdits éléments tubulaires (6, 7) supplémentaires étant disposés dans des positions qui sont sensiblement symétriques par rapport audit élément tubulaire (4).

4. Appareil (1) selon la revendication 3, dans lequel lesdits éléments tubulaires (6, 7) supplémentaires sont disposés parallèlement audit élément tubulaire (4).

5. Appareil (1) selon la revendication 1, dans lequel ledit premier élément échangeur de chaleur (13) comprend un premier corps échangeur (14), placé au-dessous de l'élément tubulaire (4).

6. Appareil (1) selon la revendication 1, dans lequel ledit premier élément échangeur de chaleur (13) comprend un premier corps échangeur (14), placé au-dessus de l'élément tubulaire (4).

7. Appareil (1) selon la revendication 5 ou 6, dans lequel ledit premier élément échangeur de chaleur (13) comprend en outre un deuxième corps échangeur (15) et un troisième corps échangeur (16), disposés sur des côtés opposés du premier corps échangeur (14) et communiquant avec celui-ci, ledit deuxième corps échangeur (15) et ledit troisième corps échangeur (16) étant sensiblement symétriques par rapport audit premier corps échangeur (14).

8. Appareil (1) selon la revendication 7, dans lequel ledit deuxième corps échangeur (15) et ledit troisième corps échangeur (16) sont disposés parallèlement audit premier corps échangeur (14).
